Europäisches Patentamt

**European Patent Office**

**Office européen des brevets**

(11) Publication number: **0 054 076**
**B1**

(12) **EUROPEAN PATENT SPECIFICATION**

(45) Date of publication of patent specification: **12.03.86**

(21) Application number: **81901680.9**

(22) Date of filing: **20.06.81**

(86) International application number:
**PCT/JP81/00142**

(87) International publication number:
**WO 82/00070 07.01.82 Gazette 82/01**

(51) Int. Cl.⁴: **H 02 M 7/04, H 02 M 1/14,
H 02 H 3/02**

(54) **DISCHARGING CIRCUIT FOR RECTIFYING POWER SOURCE.**

(30) Priority: **20.06.80 JP 82800/80**

(43) Date of publication of application:
**23.06.82 Bulletin 82/25**

(45) Publication of the grant of the patent:
**12.03.86 Bulletin 86/11**

(84) Designated Contracting States:
**DE FR GB**

(56) References cited:
**JP-A-50 083 734
JP-U-52 100 112
SU-A- 435 580
US-A-3 987 356**

(73) Proprietor: **FANUC LTD**
**3580, Shibokusa Aza-Komanba Oshino-mura
Minamitsuru-gun Yamanashi 401-05 (JP)**

(72) Inventor: **KOZAI, Yoshinori
16-3, Hirayama 2-chome
Hino-shi, Tokyo 191 (JP)**
Inventor: **KOBARI, Katsuo
6-17-35-210, Fujimicho
Tachikawa-shi Tokyo 190 (JP)**
Inventor: **SAKAMOTO, Keiji
3-27-405, Tamadaira
Hino-shi, Tokyo 191 (JP)**

(74) Representative: **Blumbach Weser Bergen
Kramer Zwirner Hoffmann Patentanwälte
Radeckestrasse 43
D-8000 München 60 (DE)**

Courier Press, Leamington Spa, England.

## Description

The present invention relates to a discharging circuit for a power source device with a rectifier circuit.

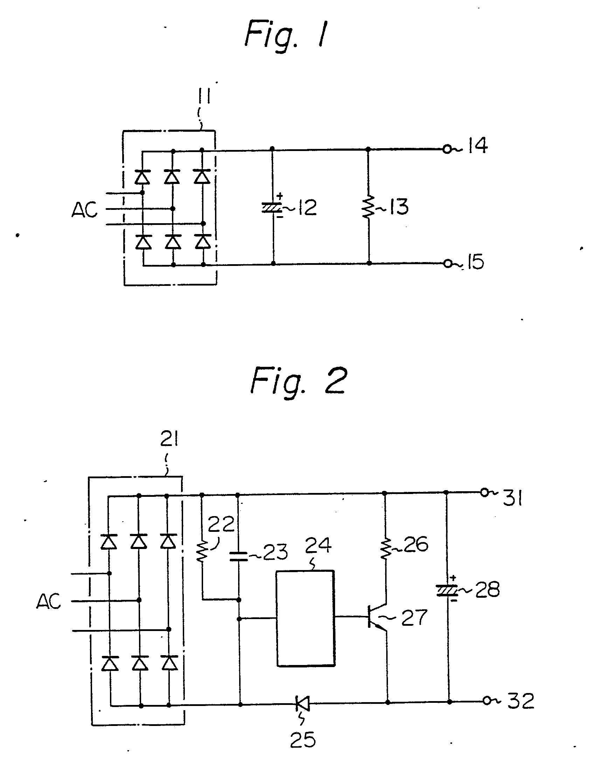

The circuit shown in Fig. 1 has been used as a conventional high power rectified direct-current power source device, for example a direct-current power supply used to drive electric motors. Namely, an output of a rectifier circuit 11 is connected to the load through terminals 14 and 15, and the circuit 11 is connected in parallel to the load with a smoothing capacitor 12 for decreasing the ripple, and a discharging resistor 13. This circuit, however, suffers from the problem that the discharging resistor 13 is continually heated when the power source voltage is applied and the problem that a large capacitor value would result in a longer time constant of the discharging circuit because of the high resistance value of the discharging resistor 13 and, thereby, concerns over unsafety due to delayed decrease of the voltage across the capacitor by discharging.

The present invention is proposed in order to solve the above-mentioned problems in the conventional circuit.

JP—A—50—83734 discloses a discharging circuit according to the first portion of the claim. In this known circuit the transistor is directly coupled in parallel to the smoothing capacitor. The control means in this known circuit is formed by a second diode. The transistor will be rendered conductive as soon as the reversed voltage between the terminal of the first diode exceeds the sum of the threshold voltages of the base-emitter diode of the transistor and of the second diode. This situation may occur during short periods of time in a normal operation due to the ripple of the output voltage of the rectifier circuit, especially if the load is an electric motor regenerating energy.

JP—U—52 100 112 discloses a discharging circuit in which a smoothing capacitor is connected in parallel to the output terminals of a rectifier. A control capacitor is connected in parallel to the smoothing capacitor via a diode. A series connection of the base-emitter diode of a first transistor and a first resistor is connected in parallel to said diode. The base of a second transistor is connected to the collector of the first transistor via a voltage divider. A series connection of the collector-emitter-path of the second transistor and a second resistor is connected in parallel to the smoothing capacitor. The problems involved in this circuit are the same as those of the prior art mentioned before.

In consideration of the above-mentioned problems of conventional discharging circuits it is an object of the present invention to provide a discharging circuit according to the first portion of the claim which avoids generation of heat in a discharging resistor, which eliminates unsafety due to a delayed discharge of the smoothing capacitor and which is especially suited for a power source device for an electric motor.

This object is achieved with a discharging circuit as claimed.

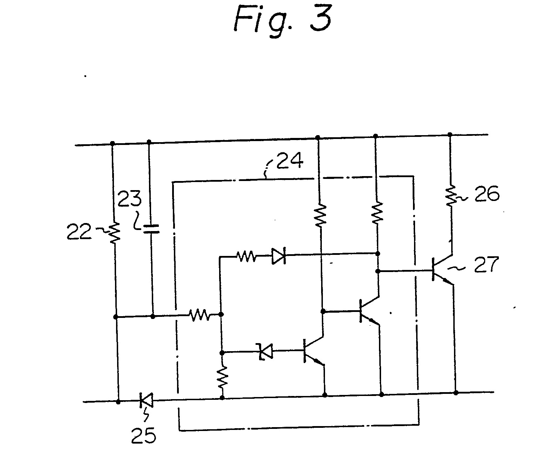

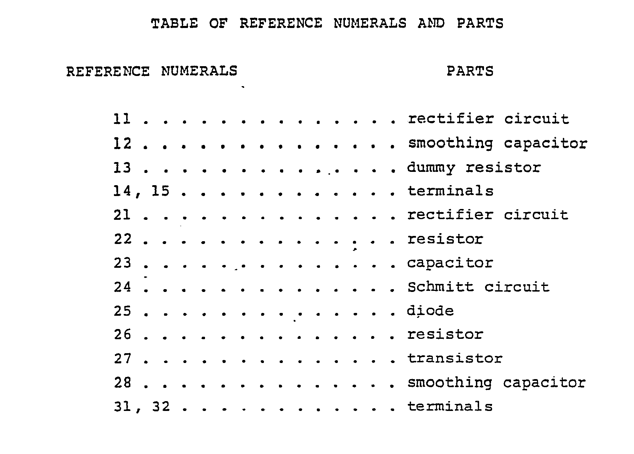

Fig. 1 is a circuit diagram of a conventional discharging circuit for a power source device with a rectifier circuit, Fig. 2 is a circuit diagram of a discharging circuit for a power source device with a rectifier circuit according to an embodiment of the present invention, Fig. 3 is a circuit diagram of a Schmitt circuit used for the circuit in Fig. 2.

Below, a discharging circuit for a power source device with a rectifier circuit according to an embodiment of the present invention is explained in reference to Fig. 2. A rectifier circuit 21 is supplied with alternating current voltage and outputs rectified voltage. One output line is connected to a terminal 31, the other output line is connected to the cathode of a diode 25, and the anode of the diode 25 is connected to a terminal 32. A load (not shown) is connected between the terminals 31 and 32. The cathode of the diode 25 is also·connected with one of the terminals of a resistor 22, one of the terminals of a capacitor 23, and the input terminal of a Schmitt circuit 24. The output of the Schmitt circuit 24 is connected to the base of a transistor 27, the emitter of the transistor 27 is connected to the anode of the diode 25, and the collector of the transistor 27 is connected to the terminal 31 through a resistor 26. A smoothing capacitor 28 is connected between the terminals 31 and 32. The other terminal of the resistor 22 and the other terminal of the capacitor 23 are connected to the terminal 31. A circuit diagram of an example of the Schmitt circuit 24 is shown in the broken-line box in Fig. 3.

The operation of the circuit according to the above-mentioned embodiment is explained below. In the normal operating condition at which the alternating current source is applied and the load is coupled, if the alternating current source is turned off and the load is electrically separated, the diode 25 is turned off and the circuit on the terminal side from the diode 25 is separated electrically from the circuit on the rectifier circuit 21 side. The circuit consisting of the resistor 22 and the capacitor 23, the time constant of which is selected to have a small value, discharges rapidly as compared with the capacitor 28, and the voltage across the capacitor 23 becomes low compared with the voltage across the capacitor 28. The voltage between the terminals of the above-mentioned two capacitors is applied across the two terminals of the diode 25 as a reversed voltage to the diode. Since the Schmitt circuit 24 turns on the transistor 27 when the voltage across the diode 25 becomes, for example, 30 volts or more and turns off when the voltage across the diode 25 becomes 10 volts or less, under the condition when the voltage across the diode 25 becomes 30 volts or more, the transistor 27 turns on and the charge on the capacitor 28 can discharge through the resistor 26. Since the electric current is applied intermittently through the resistor 26, a resistor with a comparatively small wattage can be used for the resistor 26. When the alternating current power source is applied, the voltage of the rectifier circuit be-

2

comes higher than the voltage across the capacitor 28, and the diode 25 is turned on, and hence the Schmitt circuit 24 turns off the transistor 27 and the circuit including the resistor 26 is turned off electrically.

## Claim

A discharging circuit for a smoothing capacitor (28) of a power source device, said power source device having a rectifier circuit (21) whose one terminal is connected to one terminal of said smoothing capacitor, said discharging circuit including:

a diode (25) connected between the other terminals of said rectifier circuit (21) and said smoothing capacitor (28), respectively,

a discharging path connected in parallel with said smoothing capacitor (28) and including a transistor (27),

a first resistor (22) connected across the terminals of said rectifier circuit (21), and

control means (24) connected between the connecting point of said diode (25) and said rectifier circuit (21) and the base of said transistor (27),

said control means (24) being activated when said power source is turned off by a reversed voltage between the terminals of said diode (25), so that said transistor (27) is made conductive, whereby said smoothing capacitor (28) is discharged, characterized in that

said discharging path includes a second resistor (26) connected in series with said transistor (27),·

said control means (24) is a Schmitt-circuit, and

a time constant circuit is formed by said first resistor (22) and a capacitor (23) connected in parallel with it, the time constant circuit being activated when said power source is turned off.

## Patentanspruch

Entladungsschaltung für einen Glättungskondensator (28) einer Stromquellenvorrichtung, wobei die Stromquellenvorrichtung eine Gleichrichterschaltung (21) aufweist, deren einer Anschluß mit einem Anschluß des Glättungskondensators verbunden ist, und wobei die Entladungsschaltung umfaßt:

eine Diode (25), die zwischen die anderen Anschlüsse der Gleichrichterschaltung (21) bzw. des Glättungskondensators (28) geschaltet ist,

einen Entladungspfad, der parallel zum Glättungskondensator (28) geschaltet ist und einen Transistor (27) enthält,

einen ersten Widerstand (22), der über die Anschlüsse der Gleichrichterschaltung (21) geschaltet ist, und

eine Steuereinrichtung (24), die zwischen den Verbindungspunkt von der Diode (25) und der Gleichrichterschalttung (21) und die Basis des Transistors (27) geschaltet ist,

wobei die Steuereinrichtung (24) durch eine Sperrspannung zwischen den Anschlüssen der Diode (25) aktiviert wird, wenn die Stromquelle abgeschaltet wird, so daß der Transistor (27) leitend gemacht wird und dadurch der Glättungskondensator (28) entladen wird, dadurch gekennzeichnet,

daß der Entladungspfad einen zweiten Widerstand (26) aufweist, der mit dem Transistor (27) in Reihe geschaltet ist,

daß die Steuereinrichtung (24) eine Schmitt-Schaltung ist, und

daß eine Zeitkonstantenschaltung vom ersten Widerstand (22) und einem zu ihm parallel geschalteten Kondensator (23) gebildet ist, welche Zeitkonstantenschaltung aktiviert wird, wenn die Stromquelle abgeschaltet wird.

## Revendication

Un circuit de décharge pour condensateur de lissage (28) d'une source de courant, cette source de courant étant munie d'un circuit redresseur (21), dont l'une des bornes est connectée à une borne du condensateur de lissage, ce circuit de décharge comprenant:

une diode (25) connectée entre les autres bornes respectivement du circuit redresseur (21) et du condensateur de lissage (28),

un circuit de décharge connecté en parallèle avec le condensateur de lissage (28) et comprenant un transistor (27),

une première résistance (22) connectée entre les bornes de circuit redresseur (21), et

des moyens de commande (24) connectés entre le point de connexion de la diode (25) avec le circuit redresseur (21), et la base du transistor (27),

ces moyens de commande (24) étant activés lorsque la source de courant est bloquée par une tension inverse entre les bornes de la diode (25), de sorte que le transistor (27) est rendu conducteur, déchargeant ainsi le condensateur de lissage (28), caractérisé en ce que

le circuit de décharge comprend une seconde résistance (26) connectée en série avec le transistor (27),

les moyens de commande (24) sont constitués par un circuit Schmitt, et

un circuit à constante de temps est constitué par la première résistance (22) et un condensateur (23), connectés en parallèle, le circuit à constante de temps étant activé quand la source de courant est bloquée.

# Fig. 1

# Fig. 2

1

## Fig. 3

**0 054 076**

TABLE OF REFERENCE NUMERALS AND PARTS

REFERENCE NUMERALS                    PARTS

11 . . . . . . . . . . . . . . . rectifier circuit
12 . . . . . . . . . . . . . . smoothing capacitor
13 . . . . . . . . . . . . . . . dummy resistor
14, 15 . . . . . . . . . . . . terminals
21 . . . . . . . . . . . . . . . rectifier circuit
22 . . . . . . . . . . . . . . . resistor
23 . . . . . . . . . . . . . . . capacitor
24 . . . . . . . . . . . . . . . Schmitt circuit
25 . . . . . . . . . . . . . . . diode
26 . . . . . . . . . . . . . . . resistor
27 . . . . . . . . . . . . . . . transistor
28 . . . . . . . . . . . . . . . smoothing capacitor
31, 32 . . . . . . . . . . . . terminals